(19) Europäisches Patentamt

European Patent Office

Office européen des brevets

(11) **EP 1 675 339 A1**

(12) **DEMANDE DE BREVET EUROPEEN**

(43) Date de publication:
    **28.06.2006 Bulletin 2006/26**

(51) Int Cl.:
    **H04L 27/156** (2006.01)

(21) Numéro de dépôt: **05292774.6**

(22) Date de dépôt: **22.12.2005**

(84) Etats contractants désignés:
    **AT BE BG CH CY CZ DE DK EE ES FI FR GB GR HU IE IS IT LI LT LU LV MC NL PL PT RO SE SI SK TR**
    Etats d'extension désignés:
    **AL BA HR MK YU**

(30) Priorité: **23.12.2004 FR 0413868**

(71) Demandeurs:
    • **STMicroelectronics (Rousset) SAS**
      **13790 Rousset (FR)**
    • **Université de Provence Aix-Marseille 1**
      **13331 Marseille Cedex 3 (FR)**
    • **UNIVERSITE PAUL CEZANNE AIX-MARSEILLE III**
      **13628 Aix en Provence Cedex 1 (FR)**

(72) Inventeurs:
    • **Bas, Gilles**
      **30640 Beauvoisin (FR)**
    • **Bachelet, Yann**
      **13105 Mimet (FR)**
    • **Dehaese, Nicolas**
      **13400 Aubagne (FR)**
    • **Bourdel, Sylvain**
      **13820 Ensues La Redonne (FR)**

(74) Mandataire: **Bentz, Jean-Paul et al**
    **Novagraaf Technologies,**
    **122, rue Edouard Vaillant**
    **92593 Levallois-Perret Cedex (FR)**

(54) **Décodeur et démodulateur ZCD asynchrone**

(57)    L'invention propose un détecteur pour extraire des informations binaires modulées en fréquence sur un signal porteur. Un générateur d'axes produit M paires de signaux logiques, les signaux logiques d'une même paire étant en quadrature. Le décodeur comprend M détecteurs de passage à zéro de logique asynchrone produisant des premières impulsions et des deuxièmes impulsions. Un compteur/décompteur présente des première, deuxième et troisième valeurs, et

-    lorsqu'il a la deuxième valeur, passant à la première valeur lors d'une première impulsion, et passant à la troisième valeur lors d'une deuxième impulsion, et

-    un décodeur binaire (8) génère une information binaire (Data) dont l'état n'est pas modifié lorsque le compteur/décompteur (8) passe de la première valeur à la deuxième valeur ou de la troisième valeur à la deuxième valeur.

Aucune base de temps externe n'est nécessaire et le décodeur présente un taux d'erreur sur les bits réduit.

Fig. 8

EP 1 675 339 A1

**Description**

L'invention concerne un décodeur à démodulateur dit ZCD (acronisme anglais pour Zero Crossing Demodulator) pour la démodulation de signaux modulés communément appelés signaux FSK (pour Frequency Shiftkey) qui contiennent des informations binaires modulées en fréquence sur une porteuse haute ou très haute fréquence. Dans un exemple, la porteuse a une fréquence de 2.45 GHz, modulée en fréquence par le signal contenant l'information de fréquence 2MHz. De tels démodulateurs sont notamment utilisés pour des applications faible coût, telles que la microinformatique, la domotique, les applications industrielles, bancaires, sécuritaires, etc.

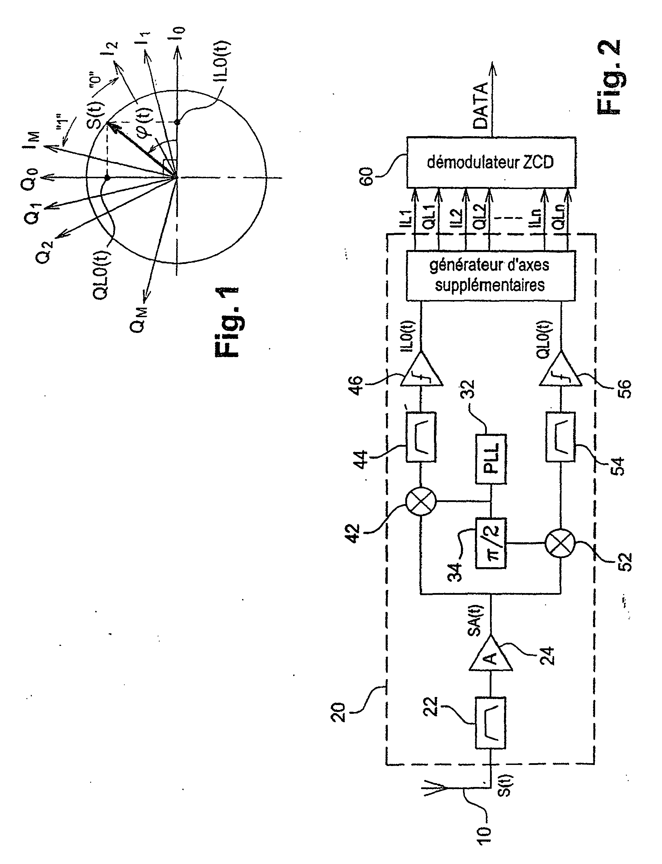

D'un point de vue théorique, un signal S(t) de type FSK reçu sur l'antenne d'un circuit de détection peut être représenté, sur deux axes I0, Q0 en quadrature, par un vecteur tournant d'abscisse IL0(t) et d'ordonnée QL0(t) (voir figure 1). Le sens de rotation du vecteur correspond à l'information binaire contenue dans les signaux IL0(t), QL0(t). Ainsi, lorsque le sens de rotation du vecteur est positif (sens de rotation des aiguilles d'une montre), l'information binaire représentée par le vecteur est un "1" logique ; inversement, lorsque le sens de rotation du vecteur est négatif, alors l'information binaire est un "0" logique. D'autre part, la vitesse de rotation du vecteur correspond à la valeur de la déviation de fréquence du signal modulé par rapport au signal porteur et est donc fonction de la fréquence de modulation de la porteuse (dans l'exemple, la déviation de fréquence est de + 2MHz lors de la transmission d'un "1" logique et - 2MHz lors de la transmission d'un "0" logique). On appelle index de modulation le rapport entre la déviation de fréquence et la fréquence de transmission des données, cet index correspond au nombre de tours effectués par le vecteur tournant au cours de la transmission d'un bit de données. Par exemple, si la fréquence de modulation de la porteuse est de 2MHz et la fréquence de transmission des données est de 1MHz, alors au cours de la transmission d'un bit de données, le vecteur fait deux tours (index de modulation = 2) et coupe ainsi en moyenne 8 fois les axes IL0 ou QL0. Voir notamment à ce sujet le document D1 : A novel digital FM receiver for mobile and personal communications, Communications, IEEE Transactions on, vol. 44, Issue 11, nov 96, pp 1466-1476.

Le sens de rotation du vecteur à un instant t donné est notamment fonction des dérivées mathématiques des signaux ILO(t), QL0(t) à l'instant t considéré. Une façon simple de déterminer le sens de rotation du vecteur tournant est d'observer la dérivée de QL0(t) à l'instant où IL0(t) passe par +/-1 (c'est-à-dire lorsque le vecteur tournant coupe l'axe 10), ou inversement, d'observer la dérivée de IL0(t) à l'instant où QL0(t) passe par +/-1 (c'est-à-dire lorsque le vecteur tournant coupe l'axe Q0). Dit autrement, on détermine d'une part le passage à zéro de l'un des signaux IL0(t), QL0(t) (lorsque l'autre signal est égal à +/- 1), et d'autre part l'ordre de passage à zéro des signaux IL0(t), QL0(t).

Pour obtenir des résultats plus précis, on utilise plusieurs paires d'axes supplémentaires (I1, Q1), (I2, Q2), ..., (IM, QM) (voir figure 1). Chaque paire d'axes supplémentaires est dérivée de la paire d'axes initiale (I0, Q0) par un déphasage croissant ou décroissant en fonction de M, compris par exemple entre 0 et Π/2 ; dans ce cas, et de manière similaire au cas où une seule paire d'axe est utilisée, le démodulateur ZCD scrute le vecteur tournant, détermine l'instant où le vecteur coupe l'un des axes I0, I1, ..., IM, Q1, Q2, ..., QM, détermine l'ordre de franchissement des différents axes et en déduit la valeur des informations transmises.

La figure 2 présente un schéma de principe d'un circuit de détection de signaux FSK comprenant une antenne 10, un générateur d'axes 20 et un démodulateur ZCD. Le circuit de détection reçoit le signal modulé S(t) sur l'antenne 10 et en extrait les informations binaires DATA qu'il contient.

Le générateur d'axes 20 produit deux signaux IL0(t), QL0(t) à partir du signal modulé S(t) qu'il reçoit sur l'antenne 10. Pour cela, le générateur d'axe filtre le signal S(t) et l'amplifie à travers le filtre 22 et l'amplificateur 24. En parallèle, un générateur 32 de type PLL (acronisme anglais pour Phase Lock Loop) produit un signal de référence de fréquence égale à la fréquence porteuse du signal modulé S(t) reçu sur l'antenne (dans un exemple 2.45 GHz); le dit signal de référence est déphasé de Π/2 dans un déphaseur 34. Dans une première branche, le signal amplifié SA(t) (de fréquence 2.45 GHz +/- 2MHz) est multiplié par le signal de référence (multiplicateur 42); le résultat de la multiplication est filtré par le filtre 44 pour supprimer la composante de fréquence 2*2.45 GHZ +/- 2MHz et ne conserver que la composante de fréquence 2MHz correspondant aux informations binaires. Cette dernière composante est ensuite écrêtée (c'est-à-dire limitée en amplitude par un écrêteur 46) pour produire un signal IL0(t) d'amplitude comprise entre 0 et 1. Dans une deuxième branche, le signal amplifié SA(t) (de fréquence 2.45 GHz +/- 2MHz) est multiplié (multiplicateur 52) par le signal de référence déphasé de Π/2, filtré par un filtre 54 (suppression de la composante du signal de fréquence 2*2.45 GHZ +/- 2MHz) puis écrêté (écrêteur 56) pour produire un signal QL0(t) d'amplitude comprise entre 0 et 1. Le signal QL0(t) est en pratique le signal IL0(t) produit par la première branche déphasé de Π/2. Les signaux IL0(t), QL0(t) contiennent uniquement les informations binaires de fréquence 2MHz initialement contenues dans le signal modulé S(t), le signal porteur ayant été éliminé par les filtres 44, 54.

Le générateur d'axes produit également M paires de signaux supplémentaires (IL1(t), QL1(t)), ..., (ILM(t), QLM(t)) et les convertit en signaux binaires correspondants (IL1, QL1), ..., (ILM, QLM). Ainsi, pour tout i :

$$ILi = 0 \text{ si } ILi(t) < 0$$

$$ILi = 1 \text{ si } ILi(t) > 0$$

$$QLi = 0 \text{ si } QLi(t) < 0$$

$$QLi = 1 \text{ si } QLi(t) > 0$$

Les signaux $(IL1(t), QL1(t)), ..., (ILM(t), QLM(t))$, et donc également les signaux binaires correspondants $(IL1, QL1), ..., (ILM, QLM)$ sont tous dérivés des signaux $(IL0(t), QL0(t))$ par déphasage croissant ou décroissant en fonction de M, M étant un entier fixé.

Les signaux $(IL1, QL1), ..., (ILM, QLM)$ sont ensuite fournis à un démodulateur ZCD 60 qui va en extraire les informations binaires DATA qu'ils contiennent. Pour cela, le démodulateur ZCD comprend un ensemble de détecteurs de passage à zéro DPZ01, DPZ02, ..., DPZOM.

Selon une structure connue, le démodulateur ZCD est de type synchrone.

Chaque détecteur DPZ0i de rang i compris entre 1 et M reçoit une paire de signaux $(ILi, QLi)$ de même rang et produit une impulsion DEi à chaque front montant d'un signal d'horloge externe CLK telle que :

$$DEi = 1 \text{ si}$$
$$ILi = 1 \text{ lorsque } QLi \text{ passe de } 0 \text{ à } 1 \text{ , ou}$$
$$QLi = 1 \text{ lorsque } ILi \text{ passe de } 1 \text{ à } 0$$

$$DEi = 0 \text{ si}$$
$$ILi = 1 \text{ lorsque } QLi \text{ passe de } 1 \text{ à } 0 \text{ , ou}$$
$$QLi = 1 \text{ lorsque } ILi \text{ passe de } 0 \text{ à } 1$$

Les impulsions DE1, DE2, ..., DEM sont utilisées pour incrémenter ou décrémenter un compteur numérique qui est cadencé par le signal d'horloge CLK. A chaque front montant du signal d'horloge CLK :

si l'une des impulsions DEi = 1, le compteur est incrémenté,
si l'une des impulsions DEi = 0, le compteur est décrémenté.

Puis, à chaque impulsion d'un signal RST, le compteur produit une donnée binaire qui est :

$$D = 1 \text{ si la valeur du compteur est positive,}$$

$$D = 0 \text{ si la valeur du compteur est négative,}$$

puis le compteur est remis à zéro.

Le compteur joue ainsi le rôle d'un intégrateur, qui intègre le signal résultant de la somme des impulsions DE1, DE2, ..., DEM sur une durée égale à la période du signal RST.

Cette structure impose de disposer d'un générateur de signaux d'horloge en dehors du décodeur ZCD, et de préférence un générateur de bonne qualité.

La demanderesse a proposé une solution à ces inconvénients dans la demande FR-04 10324 non publiée à la date de dépôt de la présente demande. Ce document décrit un démodulateur ZCD asynchrone. Ce démodulateur, illustré à la figure 3, comprend un décodeur qui produit des informations binaires DATA lorsqu'il reçoit un ensemble de paires de signaux logiques (IL1, QL1), ..., (ILM, QLM) et en extrait les données numériques DATA qu'ils contiennent. Chaque paire de signaux logiques (ILi, QLi) correspond à la valeur binaire de la paire de signaux (ILi(t), QLi(t)).Le décodeur ZCD comprend un ensemble de détecteurs de passage à zéro DPZ1, DPZ2, ..., DPZM, et un détecteur d'enveloppe asynchrone 150.

Les détecteurs de passage à zéro (DPZ1, ..., DPZM), sont des circuits de logique asynchrones générant des impulsions en fonction des signaux logiques (ILi, QLi).

* des impulsions Pi sont générées lorsque :

ILi = 1 lorsque QLi passe de 0 à 1 , ou
QLi = 1 lorsque ILi passe de 1 à 0

* des impulsions Ni sont générées lorsque :

ILi = 1 lorsque QLi passe de 1 à 0 , ou
QLi = 1 lorsque ILi passe de 0 à 1

Les impulsions Ni sont appliquées sur une première porte OU pour former un signal N. Les impulsions Pi sont appliquées sur une deuxième porte OU pour former un signal P. Le détecteur d'enveloppe asynchrone produit les informations binaires Data après avoir généré une enveloppe à partir des impulsions Pi et Ni.

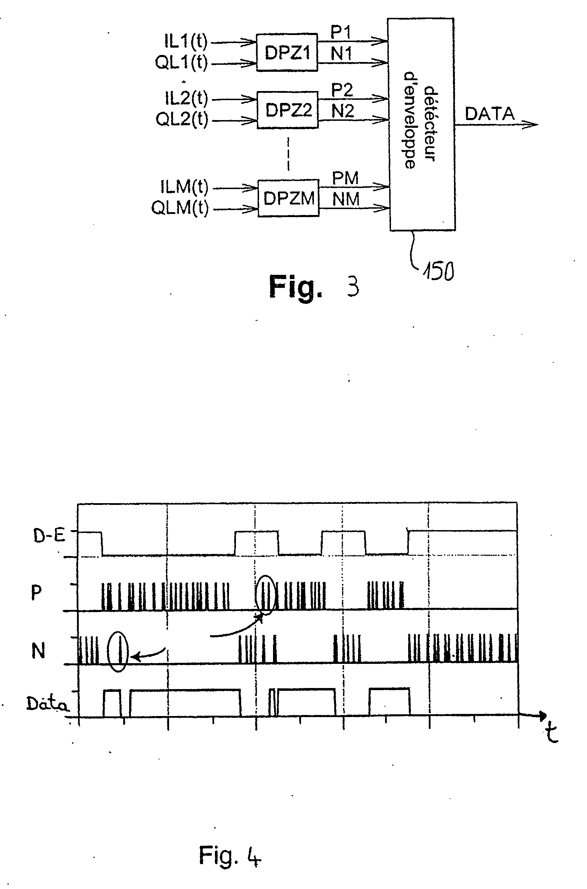

Le chronogramme de la figure 4 illustre l'incidence possible de bruits sur le signal de sortie du décodeur de la figure 3. Les bruits peuvent induire des franchissements parasites d'axes par les signaux logiques ILi et QLi. Ces franchissements parasites induisent des impulsions parasites P et N entourées sur la figure 4. Ainsi, certaines impulsions P sont remplacées par des impulsions N et vice-versa. Le signal binaire Data issu du détecteur d'enveloppe est alors altéré par rapport au signal binaire D-E d'origine. La détermination du symbole reçu est alors altérée.

Il existe un besoin pour un décodeur résolvant un ou plusieurs de ces inconvénients. L'invention a ainsi pour objet un détecteur pour extraire d'un signal modulé S(t) des informations binaires modulées en fréquence sur un signal porteur, le détecteur comprenant un générateur d'axes (20) apte à produire, à partir du signal modulé S(t), M paires de signaux logiques ((IL1, QL1); ... ; (ILM, QLM)), M étant un nombre entier supérieur ou égal à 1, les signaux logiques d'une même paire (ILi, QLi) étant en quadrature et chaque paire étant déphasée par rapport aux autres paires d'un déphasage dépendant de M, et un démodulateur (ZCD), le démodulateur (ZCD) comprenant :

- M détecteurs de passage à zéro (DPZ1, ..., DPZM), chaque détecteur étant un circuit de logique asynchrone apte à produire, en fonction d'un premier signal logique (ILi) et d'un deuxième signal logique (QLi) d'une paire de signaux logiques (ILi, QLi):

  * des premières impulsions (Ni) lorsque :

- le premier signal logique (ILi) est dans le premier état logique (1 ou 0) et le deuxième signal logique (QLi) passe du premier état logique (1 ou 0) au deuxième état logique (0 ou 1), ou
- le deuxième signal logique (QLi) est dans le premier état logique (1 ou 0) et le premier signal logique (QLi) passe du deuxième état logique (0 ou 1) au premier état logique (1 ou 0), et :

  * des deuxièmes impulsions (Pi) lorsque :

- le premier signal logique (ILi) est dans un premier état logique (1 ou 0) et le deuxième signal logique (QLi) passe d'un deuxième état logique (0 ou 1) au premier étant logique (1 ou 0), ou
- le deuxième signal logique (QLi) est dans le premier état logique (1 ou 0) et le premier signal logique (QLi) passe du premier état logique (0 ou 1) au deuxième état logique (1 ou 0), et :

- un compteur/décompteur :

  - présentant des première, deuxième et troisième valeurs, et
  - lorsqu'il a la deuxième valeur, passant à la première valeur lors d'une première impulsion, et passant à la troisième valeur lors d'une deuxième impulsion, et
  - un décodeur binaire générant à chaque impulsion une des informations binaires, l'information binaire prenant un premier état lorsque le compteur/décompteur présente la première valeur et prenant un second état lorsque le compteur/décompteur présente la troisième valeur, l'état de l'information binaire n'étant pas modifié lorsque le compteur/décompteur passe de la première valeur à la deuxième valeur ou de la troisième valeur à la deuxième valeur.

L'invention permet notamment de réduire le taux d'erreur sur les bits. L'invention peut être mise en oeuvre avec une structure simple et sans impliquer l'utilisation d'un signal de réinitialisation depuis l'extérieur.

Selon une variante, le compteur/décompteur est maintenu à la première valeur lors d'une première impulsion et maintenu à la troisième valeur lors d'une deuxième impulsion.

Selon encore une variante, le compteur/décompteur présente une quatrième valeur ne pouvant être obtenue ou maintenue lors d'une impulsion.

Selon une autre variante, lorsque le compteur/décompteur présente la quatrième valeur, il passe à la deuxième valeur lors d'une impulsion.

Selon encore une autre variante, le détecteur comprend un circuit de formation d'un signal d'horloge par combinaison des premières et deuxièmes impulsions, comprenant un détecteur d'enveloppe asynchrone pour générer une enveloppe des premières et deuxièmes impulsions, le compteur/décompteur détectant une impulsion à partir du signal d'horloge et discriminant une première impulsion d'une deuxième impulsion à partir de l'enveloppe des premières et deuxièmes impulsions.

Selon une variante, M est supérieur à 1 et le circuit de formation d'horloge additionne ensemble les premières et deuxièmes impulsions (P1, ..., PM, N1, ... NM).

Selon encore une variante, le détecteur d'enveloppe est une bascule de type flip-flop cadencée par les deuxièmes impulsions, mise à zéro par les premières impulsions et ayant une entrée de données sur laquelle un potentiel de référence ("1") est appliqué.

Selon une autre variante, le compteur/décompteur code ses valeurs sur deux bits et comprend :

- une porte OU-EX recevant en entrée les bits représentatifs de la valeur du compteur/décompteur ;
- un inverseur connecté à la sortie de la porte OU-EX ;
- une porte ET recevant en entrée l'enveloppe et la sortie de la porte OU-EX ;
- une première porte NON-ET recevant en entrée l'enveloppe et la sortie de l'inverseur ;
- une deuxième porte NON-ET recevant en entrée le complément de l'enveloppe et le bit de poids fort du compteur/décompteur ;
- une troisième porte NON-ET recevant en entrée les sorties des première et deuxième porte NON-ET ;
- une première bascule de type flip-flop cadencée par le signal d'horloge, ayant une entrée de données sur laquelle la sortie de la troisième porte NON-ET est appliquée ;
- une seconde bascule de type flip-flop cadencée par le signal d'horloge, ayant une entrée de données sur laquelle la sortie de la porte ET est appliquée et ayant une entrée de données sur laquelle un potentiel de référence ("1") est appliqué.

Selon encore une autre variante, le compteur/décompteur code ses valeurs sur deux bits et le détecteur binaire comprend :

- une quatrième porte NON-ET recevant en entrée le bit de poids fort et le complément du bit de poids faible;
- une cinquième porte NON-ET recevant en entrée l'état de l'information binaire et le bit de poids faible ;
- une sixième porte NON-ET recevant en entrée les sorties des quatrième et cinquième portes NON-ET ;
- une bascule de type flip-flop cadencée par le signal d'horloge, ayant une entrée de données sur laquelle la sortie de la sixième porte NON-ET est appliquée et dont une sortie définit l'état de l'information binaire.

Selon une variante, chaque circuit de logique asynchrone détecteur de passage à zéro comprend un ensemble de portes logiques incluant des portes ET, des portes OU, des inverseurs logiques et/ou des circuits de retard assemblées de sorte à produire les premières et deuxièmes impulsions.

L'invention sera mieux comprise et d'autres caractéristiques et avantages apparaîtront à la lecture de la description qui va suivre, d'un exemple de mise en oeuvre d'un décodeur ZCD selon l'invention. La description est à lire en relation aux dessins annexés dans lesquels :

- la figure 1, déjà décrite, est une représentation d'un signal S(t) modulé à décoder, dans un système d'axes appropriés,
- la figure 2, déjà décrite, est un schéma de principe d'un circuit de détection utilisant un décodeur ZCD connu,
- la figure 3 est un schéma de principe d'un démodulateur ZCD décrit dans une demande antérieure non publiée,
- la figure 4 est un chronogramme illustrant des erreurs de détection possibles du démodulateur de la figure 3 dans un environnement bruité,

- la figure 5 est un exemple de détecteur d'enveloppe utilisable dans un décodeur selon l'invention,
- la figure 6 est un exemple d'horloge interne utilisable dans un décodeur selon l'invention,
- la figure 7 illustre un exemple de compteur/décompteur utilisable dans un décodeur selon l'invention,
- la figure 8 illustre un exemple de décodeur d'informations binaires associé au compteur/décompteur de la figure 7,
- la figure 9 est un chronogramme représentant l'information binaire de sortie en présence de bruits,
- la figure 10 est un diagramme représentant les taux d'erreur par bit respectifs des démodulateurs de la figure 3 et des figures 5 à 8,
- la figure 11 illustre un exemple de détecteur de passage à zéro asynchrone.

L'invention propose d'appliquer les premières et deuxièmes impulsions issues des détecteurs de passage à zéro sur un compteur/décompteur. Ce compteur/décompteur présente au moins trois valeurs et la logique suivante :

- lorsque le compteur a la deuxième valeur, passage à la première valeur lors d'une première impulsion et passage à la troisième valeur lors d'une deuxième impulsion.

Le décodeur présente en outre un décodeur binaire générant à chaque impulsion une des informations binaires, l'information binaire prenant un premier état lorsque le compteur présente la première valeur et prenant un second état lorsque le compteur présente la troisième valeur, l'état de l'information binaire n'étant pas modifié lorsque le compteur passe de la première valeur à la deuxième valeur ou de la troisième valeur à la deuxième valeur.

Deux impulsions successives de même type sont donc nécessaires pour que l'état de l'information binaire soit modifié. La deuxième valeur forme donc une valeur intermédiaire évitant un changement erroné de l'information binaire de sortie.

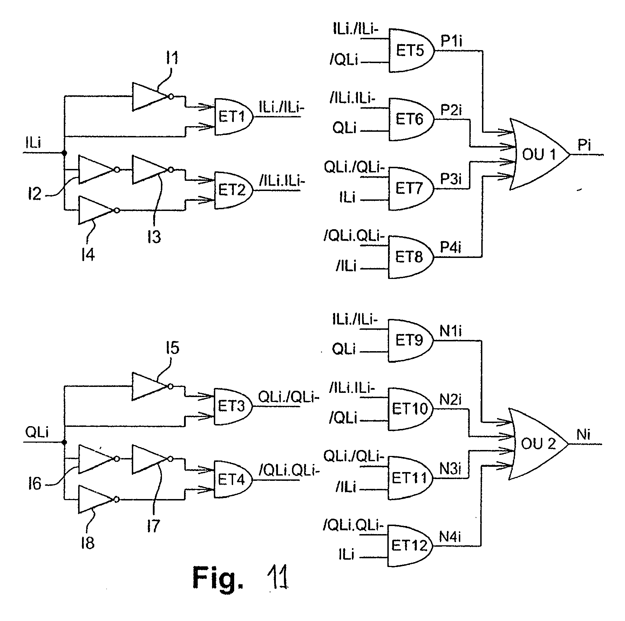

Le détecteur selon l'invention inclut des détecteurs de passage à zéro tels que ceux illustrés à la figure 11. Les détecteurs de passage à zéro DPZ1, DPZ2, . . ., DPZM sont tous similaires ; ceux-ci sont en pratique des machines d'état constituées d'un ensemble de portes logiques et qui fonctionnent de manière totalement asynchrone, c'est-à-dire sans signal de synchronisation tel qu'un signal d'horloge.

Chaque détecteur DPZi, pour i = 1 à M, reçoit une paire de signaux (ILi, QLi) et produit deux signaux Pi et Ni impulsionnels.

La notation "/" est utilisé pour parler d'un signal inverse (ou complémentaire) logique et la notation "-" est utilisée pour indiquer un signal retardé dans le temps. Un retard peut être obtenu simplement par le temps de propagation du signal dans un inverseur choisi de manière appropriée.

Le signal Ni comporte des impulsions positives à chaque fois que le vecteur tournant d'abscisse ILi(t) et d'ordonnée QLi(t) coupe l'un des axes (Ii, Qi) associés aux signaux (ILi(t), QLi (t)) et qu'il tourne dans le *sens négatif.* On a ainsi une impulsion Ni = 1 lorsque :

$$QLi = 1 \text{ et } ILi \text{ passe de } 0 \text{ à } 1,$$

ou

$$ILi = 1 \text{ et } QLi \text{ passe de } 1 \text{ à } 0,$$

ou

$$QLi = 0 \text{ et } ILi \text{ passe de } 1 \text{ à } 0,$$

ou

$$ILi = 0 \text{ et } QLi \text{ passe de } 0 \text{ à } 1.$$

Ceci peut être traduit par l'équation suivante :

$$Ni = (ILi./ILi^-).QLi + (/QLi.QLi^-).ILi +$$
$$(/ILi.ILi^-)./QLi + (QLi./QLi^-)./ILi \qquad (2)$$

Le signal Pi comporte des impulsions positives à chaque fois que le vecteur tournant d'abscisse ILi(t) et d'ordonnée QLi(t) coupe l'un des axes (Ii, Qi) associés aux signaux (ILi(t), QLi(t)) et qu'il tourne dans le sens *positif.* On a ainsi une impulsion Pi = 1 lorsque :

$$ILi = 1 \text{ et } QLi \text{ passe de } 0 \text{ à } 1,$$

ou

$$QLi = 1 \text{ et } ILi \text{ passe de } 1 \text{ à } 0,$$

ou

$$ILi = 0 \text{ et } QLi \text{ passe de } 1 \text{ à } 0,$$

ou

$$QLi = 0 \text{ et } ILi \text{ passe de } 0 \text{ à } 1.$$

Ceci peut être traduit par l'équation suivante :

$$Pi = (QLi./QLi^-).ILi + (/ILi.ILi^-).QLi +$$
$$(/QLi.QLi^-)./ILi + (Ili./ILi^-)./QLi \qquad (1)$$

On notera que, quelque soit la valeur de i compris entre 1 et M :

- on ne peut avoir des impulsions Pi que lorsque le vecteur tourne dans le *sens négatif,* c'est-à-dire lorsque la donnée binaire est égale à 0,
- on ne peut avoir des impulsions Pi que lorsque le vecteur tourne dans le *sens positif,* c'est-à-dire lorsque la donnée binaire est égale à 1.

Le détecteur DPZi illustré à la figure 11 est constitué :

- d'un ensemble d'inverseurs I1 à I8 choisis de manière appropriée pour, selon le cas, inverser et / ou retarder les signaux ILi et QLi que le détecteur reçoit,
- d'un ensemble de portes logiques ET1 à ET12, OU1, OU2, de type ET ou OU, pour combiner les signaux inversés et / ou retardés.

Par souci de clarté, les sorties des portes ET1 à ET4 ne sont pas reliées aux entrées des portes ET5 à ET12, seuls les signaux présents en sortie des portes ET1 à ET4 et appliqués en entrée des portes ET5 à ET12 sont indiqués sur la figure 11.
L'inverseur I1 introduit un retard et inverse le signal ILi, pour produire le signal /ILi⁻. Les inverseurs I2, I3, connectés en série, introduisent simplement un retard sur le signal ILi, retard environ deux fois plus important que le retard introduit par l'inverseur I1. L'inverseur I4 inverse simplement le signal ILi, sans le retarder. Les inverseurs I5, I6, I7, I8 ont une fonction similaire à la fonction des inverseurs respectivement I1, I2, I3, I4, mais appliquée au signal QLi.
La porte ET1 combine la sortie de l'inverseur I1 avec le signal ILi pour produire le signal ILi./ILi-, la porte ET2 combine la sortie de l'inverseur I3 avec la sortie de l'inverseur I4 pour produire le signal /ILi.ILi-, la porte ET3 combine la sortie de l'inverseur 15 avec le signal QLi pour produire le signal QLi./QLi- et la porte ET4 combine la sortie de l'inverseur I7 avec la sortie de l'inverseur I8 pour produire le signal /QLi.QLi-.

La porte ET9 combine la sortie de la porte ET1 et le signal QLi pour produire le signal N1i, la porte ET10 combine la sortie de la porte ET2 avec la sortie de l'inverseur I8 pour produire le signal N2i, la porte ET11 combine la sortie de la porte ET3 avec la sortie de l'inverseur I4 pour produire le signal P3i et la porte ET12 combine la sortie de la porte ET4 avec le signal ILi pour produire le signal N4i. Enfin, la porte OU2 combine les signaux N1i, N2i, N3i, N4i pour produire le signal de sortie Ni.

De façon similaire, la porte ET5 combine la sortie de la porte ET1 et la sortie de l'inverseur I8 pour produire le signal P1i, la porte ET6 combine la sortie de la porte ET2 avec le signal QLi pour produire le signal P2i, la porte ET7 combine la sortie de la porte ET3 avec le signal ILi pour produire le signal P3i et la porte ET8 combine la sortie de la porte ET4 avec la sortie de l'inverseur I4 pour produire le signal P4i. Enfin, la porte OU1 combine les signaux P1i, P2i, P3i, P4i pour produire le signal de sortie Pi.

Dans les exemples illustrés par la suite, les premier et second états de l'information binaire sont respectivement 0 et 1, et les premières et deuxièmes impulsions sont respectivement de type Ni et Pi.

Le compteur/décompteur nécessite au moins trois valeurs. Dans la plupart de ses réalisations pratiques, ce compteur/décompteur présentera cependant quatre valeurs. La quatrième valeur correspond avantageusement à un état aléatoire du compteur/décompteur qui ne peut être obtenu que lors de l'initialisation du décodeur. La logique du compteur/décompteur est configurée pour ne prendre qu'une des première, deuxième ou troisième valeurs après une impulsion. Une commande de réinitialisation extérieure du compteur/décompteur n'est alors pas indispensable lors de la mise sous tension du décodeur selon l'invention.

Le compteur/décompteur présente alors le tableau de vérité suivant :

| Valeur compteur | Q1 | Q0 | P | N | Valeur suivante | Q1$^+$ + | Q0$^+$ |
|---|---|---|---|---|---|---|---|
| 1 | 0 | 0 | ↑ |  | 2 | 0 | 1 |
| 2 | 0 | 1 | ↑ |  | 3 | 1 | 0 |
| 3 | 1 | 0 | ↑ |  | 3 | 1 | 0 |
| 4 | 1 | 1 | ↑ |  | 2 | 0 | 1 |
| 1 | 0 | 0 |  | ↑ | 1 | 0 | 0 |
| 2 | 0 | 1 |  | ↑ | 1 | 0 | 0 |
| 3 | 1 | 0 |  | ↑ | 2 | 0 | 1 |
| 4 | 1 | 1 |  | ↑ | 2 | 0 | 1 |

Le compteur-décompteur forme ainsi un filtre intégrateur à saturation dont les valeurs sont comprises entre 1 et 3 en fonctionnement. La valeur d'un tel filtre intégrateur à saturation peut être obtenue avec la formule suivante :

$$V_e = \text{Sat}(V_{e-1} + \sum_{m=1}^{M} D_{e,m}),$$

La function y=Sat (x) étant définie comme suit: y = 3 pour x>3, y=1 pour x<1 et y=x pour les autres valeurs de x.

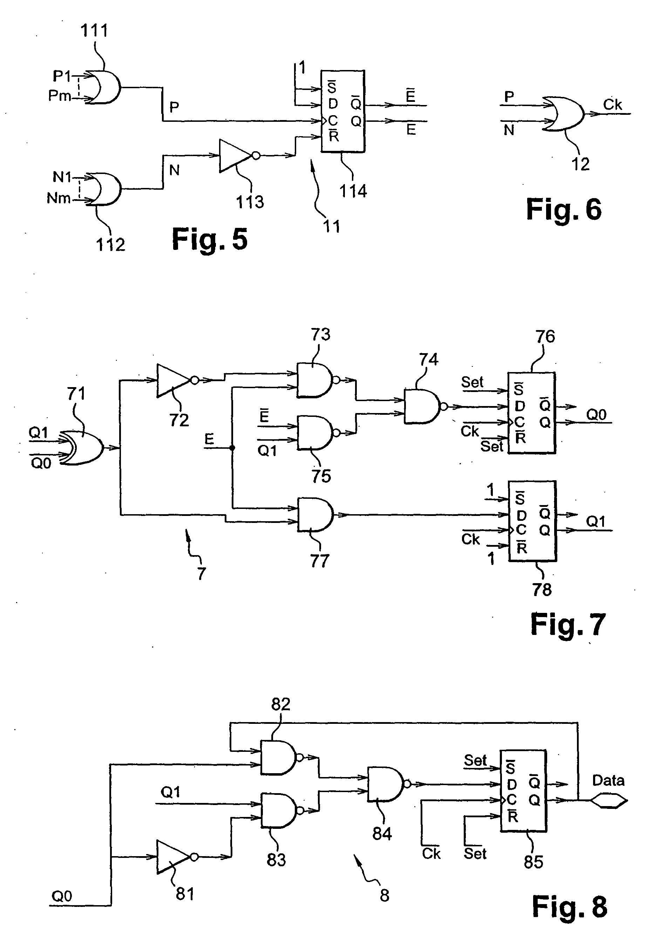

Les figures 5 à 8 illustrent un mode de réalisation de l'invention basé sur des bascules flip-flop. Ce mode de réalisation crée et utilise notamment des signaux d'enveloppe et d'horloge. La structure de ce mode de réalisation est particulièrement simple et fournit au décodeur une indépendance par rapport à des commandes extérieures.

La figure 5 illustre un exemple de détecteur d'enveloppe 11. Le détecteur d'enveloppe 11 comprend une porte OU 112 recevant en entrée les premières impulsions N1 à NM et générant en sortie le signal N. Le détecteur d'enveloppe 11 comprend une porte OU 111 recevant en entrée les deuxièmes impulsions P1 à PM et générant le signal P en sortie. Le détecteur 11 comprend également une bascule 114 de type flip-flop cadencée par les deuxièmes impulsions.

Le signal N et le signal P sont appliqués respectivement sur l'entrée de remise à zéro et sur l'entrée d'horloge de la bascule 114, un "1" logique étant appliqué sur l'entrée de donnée D de la bascule 114. Selon la table de vérité de la bascule 114, à chaque front montant du signal P, l'entrée de donnée D de la bascule est recopiée sur sa sortie de données Q, et à chaque front montant du signal N, la sortie Q est positionnée à 0 jusqu'au prochain front montant du signal P. Les signaux d'enveloppe E et /E sont ainsi générés respectivement sur les sorties de données Q et /Q de la bascule 114.

Ainsi, le signal P fait office de signal d'horloge et le signal N fait office de signal de remise à zéro pour la bascule 114 dont l'entrée de données est maintenue à "1". Le détecteur d'enveloppe 11 utilise ainsi des signaux d'horloge et de remise à zéro qui sont synchrones avec les données à détecter ; ceci permet d'obtenir une précision optimale sans recours à une horloge externe.

La figure 6 illustre la génération d'un signal d'horloge interne à partir des impulsions N et P. Les impulsions N et P sont appliquées sur l'entrée d'une porte OU 12. La porte OU 12 génère ainsi une impulsion Ck à chaque impulsion N ou P.

La figure 7 illustre un exemple de structure de compteur-décompteur 7 à quatre valeurs définies par les combinaisons des bits $Q_1$ et $Q_0$. La première valeur est associée à la combinaison (0,0), la deuxième valeur est associée à la combinaison (0,1), la troisième valeur est associée à la combinaison (1,0) et une quatrième valeur est associée à la combinaison (1,1).

Les bits $Q_0$ et $Q_1$ sont appliqués sur l'entrée d'une porte OU-EX 71. La sortie de la porte 71 est connectée à l'entrée de l'inverseur 72 et à une entrée de la porte ET 77. La sortie de l'inverseur 72 est connectée à une entrée de la porte NON-ET 73. Le signal enveloppe E est appliqué sur une autre entrée de la porte 73 et sur une autre entrée de la porte 77. Le signal enveloppe /E et le bit $Q_1$ sont appliqués sur l'entrée de la porte NON-ET 75. Les sorties des portes 73 et 75 sont appliquées sur les entrées d'une porte NON-ET 74.

La sortie de la porte 74 est appliquée sur l'entrée D d'une bascule 76. Le signal Ck est appliqué sur l'entrée d'horloge et le signal Set est appliqué sur les entrées R et S de cette bascule. La bascule fournit le bit $Q_0$ en sortie.

La sortie de la porte 77 est appliquée sur l'entrée D d'une bascule 78. Le signal Ck est appliqué sur l'entrée d'horloge et un signal au niveau logique « 1 » est appliqué sur les entrées R et S de cette bascule. La bascule fournit le bit $Q_1$ en sortie.

Le circuit de la figure 7 vérifie alors les équations logiques suivantes :

$$Q_0{}^+ \; = \; E./(Q_1 \; \oplus \; Q_0) \; + \; /E.Q_1$$

$$Q_1{}^+ \; = \; E.(Q_1 \; \oplus \; Q_0)$$

Le tableau de vérité du compteur/décompteur est alors le suivant:

| Valeur compteur | Q1 | Q0 | Ck | E | Valeur suivante | Q1⁺ | Q0⁺ |
|---|---|---|---|---|---|---|---|
| 1 | 0 | 0 | ↑ | 1 | 2 | 0 | 1 |
| 2 | 0 | 1 | ↑ | 1 | 3 | 1 | 0 |
| 3 | 1 | 0 | ↑ | 1 | 3 | 1 | 0 |
| 4 | 1 | 1 | ↑ | 1 | 2 | 0 | 1 |
| 1 | 0 | 0 | ↑ | 0 | 1 | 0 | 0 |
| 2 | 0 | 1 | ↑ | 0 | 1 | 0 | 0 |
| 3 | 1 | 0 | ↑ | 0 | 2 | 0 | 1 |
| 4 | 1 | 1 | ↑ | 0 | 2 | 0 | 1 |

On constate que la quatrième valeur ne peut être obtenue que lors de l'initialisation du circuit : quelle que soit la valeur du compteur/décompteur 7, quelle que soit la valeur du signal E, une impulsion Ck ne peut modifier la valeur du compteur/décompteur 7 vers la quatrième valeur. Le compteur/décompteur 7 ne nécessite donc pas de réinitialisation extérieure. L'autonomie du détecteur par rapport à l'extérieur est ainsi encore accrue.

La figure 8 illustre un exemple de décodeur binaire 8 associé au compteur/décompteur 7 de la figure 7.

Le bit $Q_0$ est appliqué sur l'entrée d'un inverseur 81 et sur une entrée de la porte NON-ET 82. Le signal binaire Data est appliqué sur une autre entrée de la porte 82. La sortie de l'inverseur 81 et le bit $Q_1$ sont appliqués sur l'entrée de la porte NON-ET 83. Les sorties des portes 82 et 83 sont appliquées sur des entrées respectives d'une porte NON-ET 84. La sortie de la porte 84 est appliquée sur l'entrée D d'une bascule 85. Le signal Ck est appliqué sur l'entrée d'horloge de cette bascule 85. Le signal Set est appliqué sur les entrées R et S de cette bascule 85. La bascule fournit sur sa sortie Q l'information binaire recherchée.

Le décodeur binaire 8 présente ainsi le tableau de vérité suivant :

| Valeur compteur | Q1 | Q0 | Ck | D | $D^+$ |
|---|---|---|---|---|---|
| 1 | 0 | 0 | ↑ | 0 | 0 |
| 2 | 0 | 1 | ↑ | 0 | 0 |
| 3 | 1 | 0 | ↑ | 0 | 1 |
| 4 | 1 | 1 | ↑ | 0 | 0 |
| 1 | 0 | 0 | ↑ | 1 | 0 |
| 2 | 0 | 1 | ↑ | 1 | 1 |
| 3 | 1 | 0 | ↑ | 1 | 1 |
| 4 | 1 | 1 | ↑ | 1 | 1 |

Ce tableau correspond à l'équation suivante :

$$D^+ = Q_1./Q_0 + D.Q_0$$

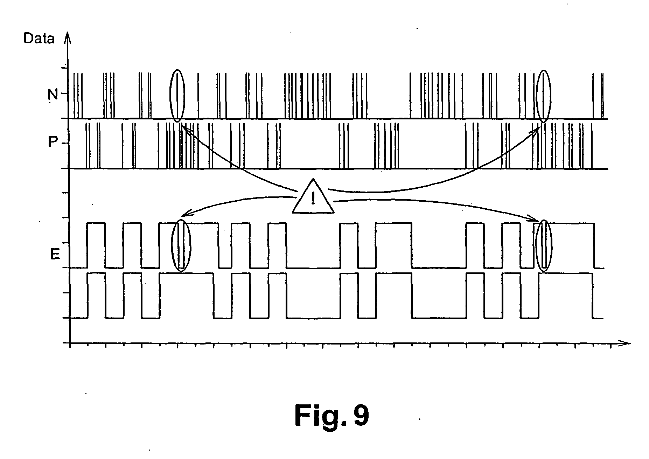

La figure 9 représente un chronogramme de fonctionnement du décodeur de l'invention lors d'erreurs sur les impulsions N et P. Les impulsions N erronées sont entourées. Leur incidence sur le signal d'enveloppe est illustrée. On constate cependant que l'information binaire de sortie Data est conforme au signal binaire d'origine. Les impulsions N erronées n'ont donc eu aucune incidence sur le signal Data.

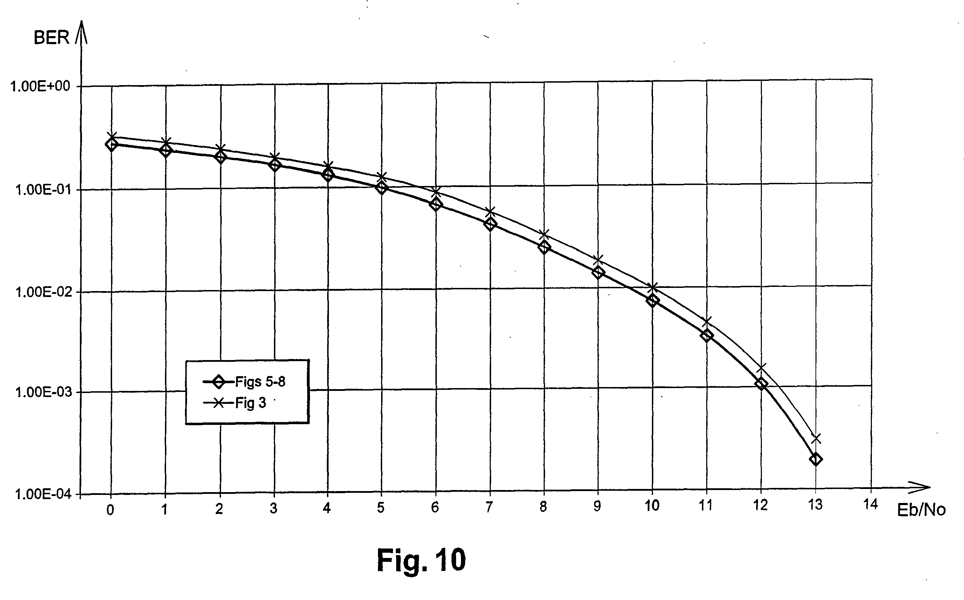

La figure 10 représente les taux d'erreur par bit respectifs du démodulateur de la figure 3 et du démodulateur des figures 5 à 8, en fonction du rapport signal à bruit. On constate que le détecteur selon l'invention présente un taux d'erreur inférieur sur l'ensemble de la plage testée. Le détecteur selon l'invention peut alors être utilisé avec un index de modulation réduit, par exemple 1 ou 2. La bande passante de la chaîne de réception incluant le détecteur peut ainsi être accrue.

Bien que l'exemple illustré corresponde à la présence de plusieurs couples d'axes, l'invention s'applique bien entendu également au cas d'un unique couple d'axes.

**Revendications**

1. Détecteur pour extraire d'un signal modulé S(t) des informations binaires modulées en fréquence sur un signal porteur, le détecteur comprenant un générateur d'axes (20) apte à produire, à partir du signal modulé S(t), M paires de signaux logiques ((IL1, QL1); ... ; (ILM, QLM)), M étant un nombre entier supérieur ou égal à 1, les signaux logiques d'une même paire (ILi, QLi) étant en quadrature et chaque paire étant déphasée par rapport aux autres paires d'un déphasage dépendant de M, et un démodulateur (ZCD), le détecteur étant **caractérisé en ce que** le démodulateur (ZCD) comprend :

   - M détecteurs de passage à zéro (DPZ1, ..., DPZM), chaque détecteur étant un circuit de logique asynchrone apte à produire, en fonction d'un premier signal logique (ILi) et d'un deuxième signal logique (QLi) d'une paire de signaux logiques (ILi, QLi):

      * des premières impulsions (Ni) lorsque :

   - le premier signal logique (ILi) est dans le premier état logique (1 ou 0) et le deuxième signal logique (QLi) passe du premier état logique (1 ou 0) au deuxième état logique (0 ou 1), ou
   - le deuxième signal logique (QLi) est dans le premier état logique (1 ou 0) et le premier signal logique (QLi) passe du deuxième état logique (0 ou 1) au premier état logique (1 ou 0), et :

      * des deuxièmes impulsions (Pi) lorsque :

- le premier signal logique (ILi) est dans un premier état logique (1 ou 0) et le deuxième signal logique (QLi) passe d'un deuxième état logique (0 ou 1) au premier étant logique (1 ou 0), ou
- le deuxième signal logique (QLi) est dans le premier état logique (1 ou 0) et le premier signal logique (QLi) passe du premier état logique (0 ou 1) au deuxième état logique (1 ou 0), et :
- un compteur/décompteur (7) :
- présentant des première, deuxième et troisième valeurs, et
- lorsqu'il a la deuxième valeur, passant à la première valeur lors d'une première impulsion, et passant à la troisième valeur lors d'une deuxième impulsion, et
- un décodeur binaire (8) générant à chaque impulsion une des informations binaires, l'information binaire prenant un premier état lorsque le compteur/décompteur présente la première valeur et prenant un second état lorsque le compteur/décompteur présente la troisième valeur, l'état de l'information binaire n'étant pas modifié lorsque le compteur/décompteur passe de la première valeur à la deuxième valeur ou de la troisième valeur à la deuxième valeur.

2.  Détecteur selon la revendication 1, dans lequel le compteur/décompteur (7) est maintenu à la première valeur lors d'une première impulsion (Ni) et maintenu à la troisième valeur lors d'une deuxième impulsion (Pi).

3.  Détecteur selon la revendication 1 ou 2, dans lequel le compteur/décompteur présente une quatrième valeur ne pouvant être obtenue ou maintenue lors d'une impulsion.

4.  Détecteur selon la revendication 3, dans lequel, lorsque le compteur/décompteur présente la quatrième valeur, il passe à la deuxième valeur lors d'une impulsion.

5.  Détecteur selon l'une quelconque des revendications précédentes, comprenant un circuit de formation d'un signal d'horloge (12) par combinaison des premières et deuxièmes impulsions, comprenant un détecteur d'enveloppe (11) asynchrone pour générer une enveloppe des premières et deuxièmes impulsions, le compteur/décompteur (7) détectant une impulsion à partir du signal d'horloge et discriminant une première impulsion d'une deuxième impulsion à partir de l'enveloppe des premières et deuxièmes impulsions.

6.  Détecteur selon la revendication 5, dans lequel M est supérieur à 1 et dans lequel le circuit de formation d'horloge (12) additionne ensemble les premières et deuxièmes impulsions (P1, ..., PM, N1, ... NM) .

7.  Détecteur selon la revendication 5 ou 6, dans lequel le détecteur d'enveloppe (11) est une bascule de type flip-flop cadencée par les deuxièmes impulsions, mise à zéro par les premières impulsions et ayant une entrée de données sur laquelle un potentiel de référence ("1") est appliqué.

8.  Détecteur selon l'une quelconque des revendications 5 à 7, dans lequel le compteur/décompteur code ses valeurs sur deux bits et comprend :

    - une porte OU-EX (71) recevant en entrée les bits représentatifs de la valeur du compteur/décompteur ;
    - un inverseur (72) connecté à la sortie de la porte OU-EX ;
    - une porte ET (77) recevant en entrée l'enveloppe et la sortie de la porte OU-EX ;
    - une première porte NON-ET (73) recevant en entrée l'enveloppe et la sortie de l'inverseur ;
    - une deuxième porte NON-ET (75) recevant en entrée le complément de l'enveloppe et le bit de poids fort du compteur/décompteur ;
    - une troisième porte NON-ET (74) recevant en entrée les sorties des première et deuxième porte NON-ET ;
    - une première bascule (76) de type flip-flop cadencée par le signal d'horloge, ayant une entrée de données sur laquelle la sortie de la troisième porte NON-ET est appliquée ;
    - une seconde bascule (78) de type flip-flop cadencée par le signal d'horloge, ayant une entrée de données sur laquelle la sortie de la porte ET est appliquée et ayant une entrée de données sur laquelle un potentiel de référence ("1") est appliqué.

9.  Détecteur selon l'une quelconque des revendications 5 à 8, dans lequel le compteur/décompteur code ses valeurs sur deux bits et dans lequel le détecteur binaire comprend :

    - une quatrième porte NON-ET (83) recevant en entrée le bit de poids fort et le complément du bit de poids faible;
    - une cinquième porte NON-ET (82) recevant en entrée l'état de l'information binaire et le bit de poids faible ;
    - une sixième porte NON-ET (84) recevant en entrée les sorties des quatrième et cinquième portes NON-ET ;

- une bascule de type flip-flop (85) cadencée par le signal d'horloge, ayant une entrée de données sur laquelle la sortie de la sixième porte NON-ET est appliquée et dont une sortie définit l'état de l'information binaire.

10. Détecteur selon l'une quelconque des revendications précédentes, dans lequel chaque circuit de logique asynchrone détecteur de passage à zéro comprend un ensemble de portes logiques incluant des portes ET, des portes OU, des inverseurs logiques et/ou des circuits de retard assemblées de sorte à produire les premières et deuxièmes impulsions.

EP 1 675 339 A1

Fig. 1

Fig. 2

**Fig. 3**

Fig. 4

Fig. 5

Fig. 6

Fig. 7

Fig. 8

**Fig. 9**

Fig. 10

Fig. 11

**Office européen des brevets**

**RAPPORT DE RECHERCHE EUROPEENNE**

Numéro de la demande

EP 05 29 2774

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 5 469 112 A (LEE) 21 novembre 1995 (1995-11-21) * colonne 3, ligne 55 - ligne 62 * ----- | 1 | H04L27/156 |
| A | KWON, LEE: "A Novel Digital FM Receiver for Mobile and Personal Communications" IEEE TRANSACTIONS ON COMMUNICATIONS, vol. 44, no. 11, novembre 1996 (1996-11), page 1476, XP002334071 New York, US * page 1470, dernier alinéa - page 1471, alinéa 1 * ----- | 1 | |
| A | US 5 633 895 A (POWELL ET AL.) 27 mai 1997 (1997-05-27) * colonne 3, ligne 49 - ligne 65 * ----- | 1 | |

DOMAINES TECHNIQUES RECHERCHES (IPC)

H04L

Le présent rapport a été établi pour toutes les revendications

| Lieu de la recherche | Date d'achèvement de la recherche | Examinateur |
|---|---|---|
| La Haye | 1 mars 2006 | Scriven, P |

**ANNEXE AU RAPPORT DE RECHERCHE EUROPEENNE
RELATIF A LA DEMANDE DE BREVET EUROPEEN NO.**

EP 05 29 2774

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

01-03-2006

| Document brevet cité au rapport de recherche | | Date de publication | Membre(s) de la famille de brevet(s) | Date de publication |
|---|---|---|---|---|
| US 5469112 | A | 21-11-1995 | WO 9605679 A1 | 22-02-1996 |
| US 5633895 | A | 27-05-1997 | AUCUN | |

EPO FORM P0460